# EUROPEAN PATENT SPECIFICATION

(11) **EP 2 104 193 B1**
(45) Date of publication and mention of the grant of the patent: **17.09.2014**
(21) Application number: 08425188.3
(22) Date of filing: 21.03.2008
(51) Int. Cl.: H02B 1/052, H01H 71/08

(54) **Rapid plug-in modular electrical equipment**
Schnellsteckvorrichtung für elektrische Module
Branchement rapide pour un module électrique

(43) Date of publication of application: 23.09.2009
(73) Proprietor: BTICINO S.P.A., Viale Borri, 231 21100 Varese (IT)
(72) Inventor: Fabrizi, Fabrizio, 24122 Bergamo (IT); Re, Marcello, 21040 Venegono Superiore, Varese (IT)
(74) Representative: Mozzi, Matteo

(56) References cited:
- EP-A- 0 472 409
- EP-A- 0 748 018
- EP-A- 0 798 835
- EP-A- 1 249 909
- WO-A-01/29856

## Description

The present invention relates to a rapid-plug-in modular electrical equipment.

In the low power household, public, and industrial electrical systems, modular electrical apparatuses are used, for example, switches, with a rapid plug-in, which are received in electric power distribution and protection boards and/or cabinets. Such electrical apparatuses are removably coupled, put in a side-by-side relationship, to support tracks secured to an inner frame of the board.

The configuration of these electrical apparatuses is a box-shaped one, having two parallel planar sides, a front part where a control or signalling member is located, and a rear part so configured as to form a track coupling seat. The securing of the apparatus to the track takes place through two opposite hooks which are slidingly mounted in seats of the apparatus boxed body.

The electrical apparatus which is herein referred to has, in the rear part thereof, a main inlet terminal so shaped as a plug-in connector, and has, in the lower part thereof, an output terminal so shaped as a clamp; furthermore, such apparatus has, in the upper part thereof, a second inlet terminal so shaped as a clamp which can be used or not, according to the use of the apparatus.

The several electrical apparatuses put in a side-by-side relationship are connected to a series of electric power distribution bars. Particularly, a series of parallel conductor bars is provided which are mounted in special seats of an insulating material structure, also secured inside the board or cabinet.

Usually, a series of apparatuses is connected to a corresponding series of bars. For example, in the case of a three-phase electric power supply, four switches are provided which are connected to four different bars, that is, three switches for the three phases, and a switch for the neutral.

It shall be appreciated that the need to connect the apparatuses to different bars leads to structural diversifications of the apparatuses-bars electrical connection, which complicates the design of such apparatuses as regards modularity, moreover in terms of containment of production costs.

It should be added the electrical safety need, which involves that there are no energized conductor members exposed at the moment when such electrical apparatuses are disconnected from the distribution bars.

EP 0 472 409 A1 relates to an electrical supply equipment comprising a circuit breaker including a housing having side faces provided on the underside with a mounting recess, for mounting on a mounting rail.

The object of the present invention is to provide a modular electrical equipment which allows the above-mentioned structural diversification of the electrical connection between apparatus and bars, with containment of the production costs, while meeting the above-mentioned electrical safety need.

Such object is achieved by a modular electrical equipment as defined in the annexed claim 1.

In order to better understand the invention, an exemplary, non-limiting embodiment thereof is described below, illustrated in the annexed drawings, in which:
Fig. 1 shows a perspective view of a modular electrical equipment according to the invention;
Fig. 2 is a partial top view of the equipment of Fig. 1;
Fig. 3 is a perspective exploded view of the equipment of Fig. 1;
Figs. 4, 5 show two different perspective views of a removable component of the equipment of Fig. 1;
Fig. 6 shows a perspective view of the component body of Figs. 4, 5;
Figs. 7, 8 show two different perspective views of a contact member of the component of Figs. 4, 5;
Fig. 9 shows a perspective view of a component closure member of Figs. 4, 5;
Figs. 10, 11 show a perspective view of an alternative contact member of the component of Figs. 4, 5;
Fig. 12 shows a sectional perspective view of a contact bar assembly;
Fig. 13 is a side view of the contact bar assembly of Fig. 12;
Figs. 14, 15 show two different perspective views of the equipment of Fig. 1 mounted on a track and connected to the contact bar assembly.

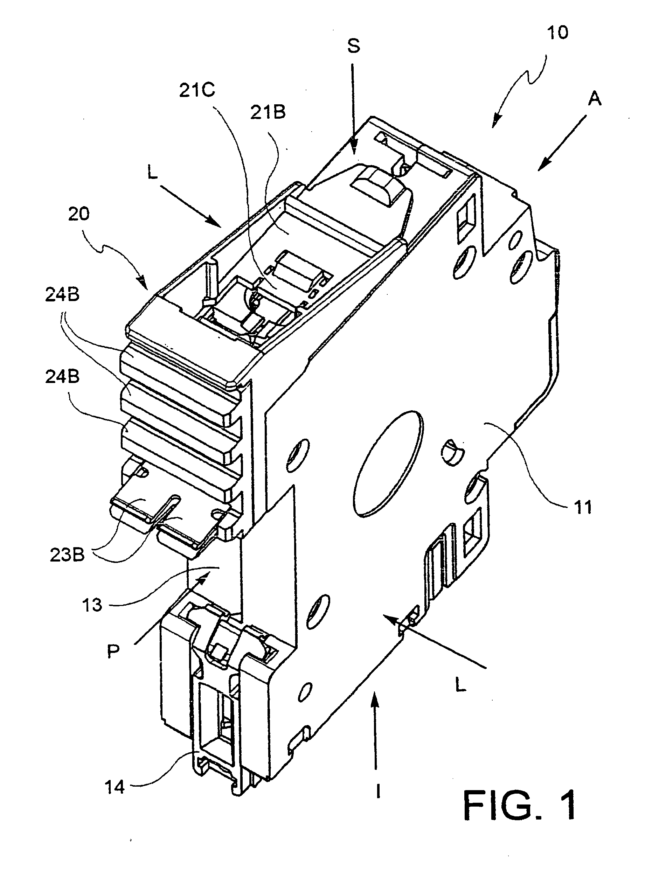

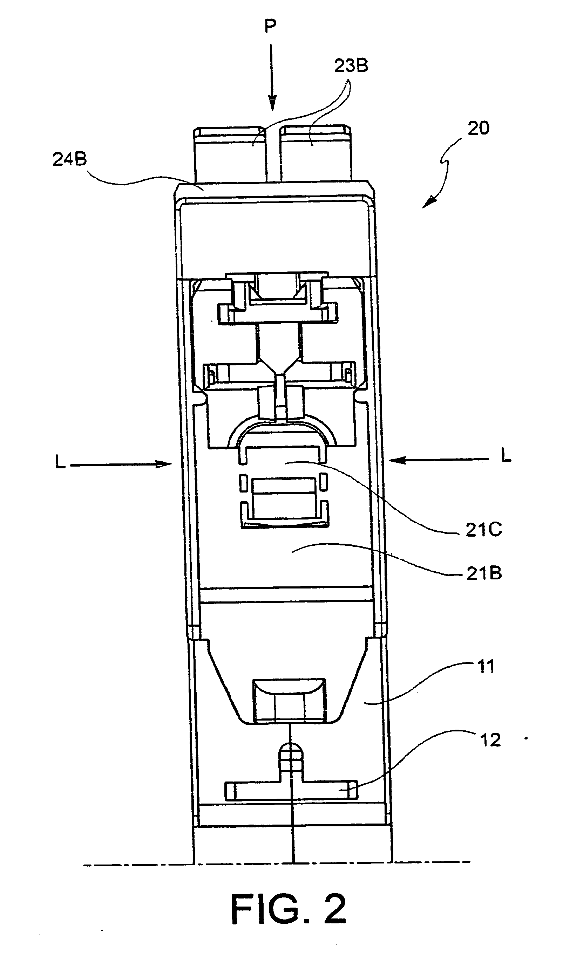

The modular electrical equipment of the Figs. 1, 2, 3 comprises, by way of example, an electrical switch 10 with thermomagnetic release in the event of an overcurrent.

The switch 10 comprises a boxed body 11 of insulating material, in which the electrical and mechanical devices are hold, of a known type, which provide to the switch functioning.

The boxed body 11 provides two parallel planar side parts L, a front part A where a control lever 12 is located, and a rear part P for the switch mechanical and electrical connection. The upper and lower parts are respectively indicated with S and I.

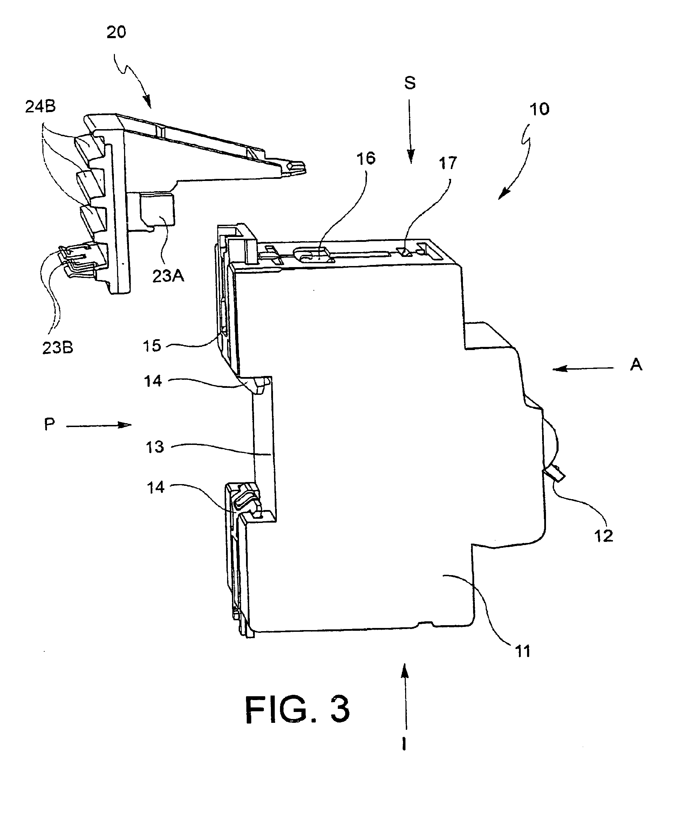

With reference to the Fig. 3, for the mechanical connection, a coupling structure of a known type is provided in the rear part P of the switch 10 which consists in a "C"-shaped seat 13 and two opposite hooks 14 which are slidable at the "C"-shaped seat.

For the electrical connection, a main input terminal is provided, again in the rear part P of the switch 10, which consists in a plug-in connector 15, and an output terminal, not shown, is provided in the lower part I, so shaped as a clamp; furthermore, a second input terminal is provided in the switch 10 upper part S, so shaped as a clamp 16, which can be used or not according to the type of electrical connection to be implemented. All these electrical connections are *per se* known in the switches of the described and illustrated type.

A coupling notch 17 is also obtained in the upper part of the switch 10 boxed body 11, as it will be seen below.

The switch 10 comprises a removable appendix 20, having an insulating material structure, with a squared configuration, and being mounted at an angle of the switch 10 and, particularly, it is mounted on the switch 10 rear P and upper S parts.

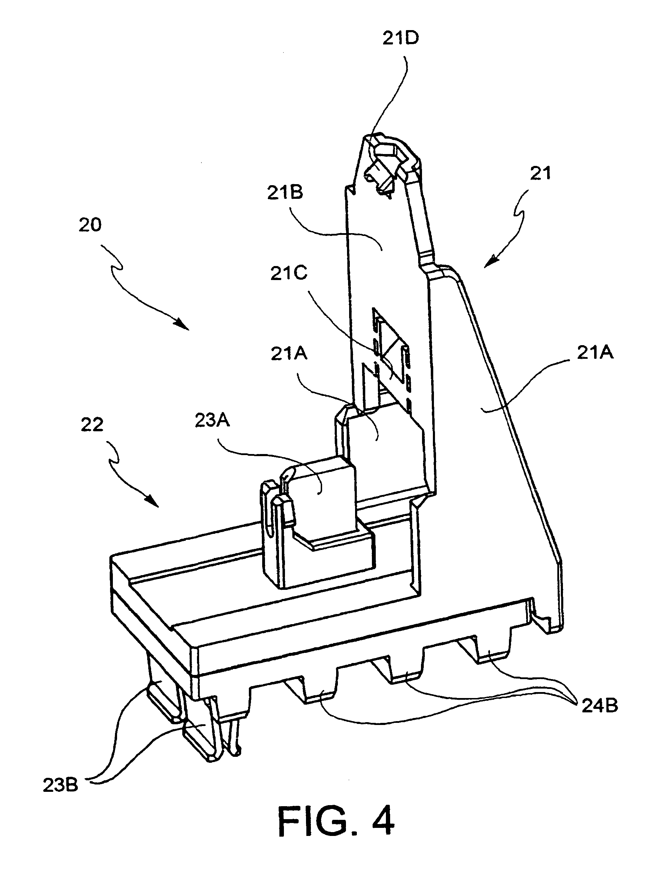

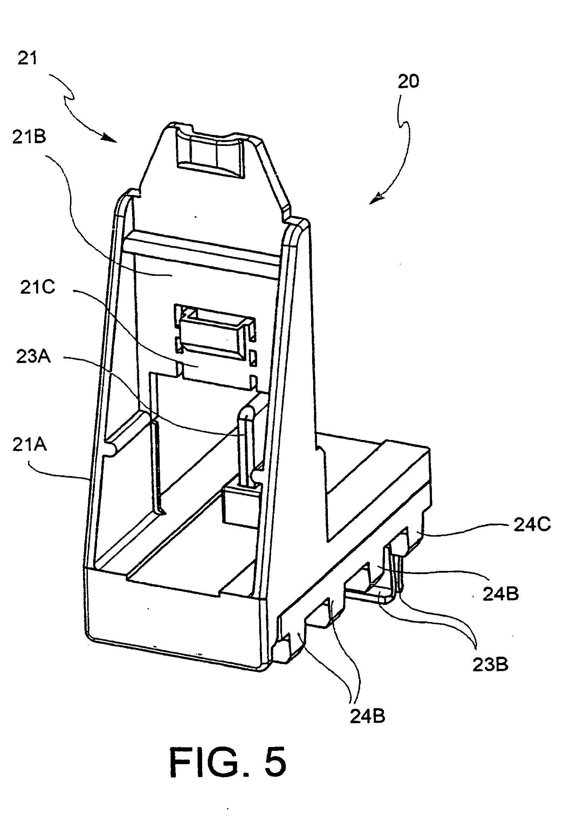

Such appendix 20 is shown in detail in Figs. 4, 5, and consists in a coupling portion 21 and a contact carrier portion 22.

The coupling portion 21 is composed by two shoulders 21A supporting a planar wall 21B having a frangible section 21C and provided, at an end thereof, with a tooth 21D.

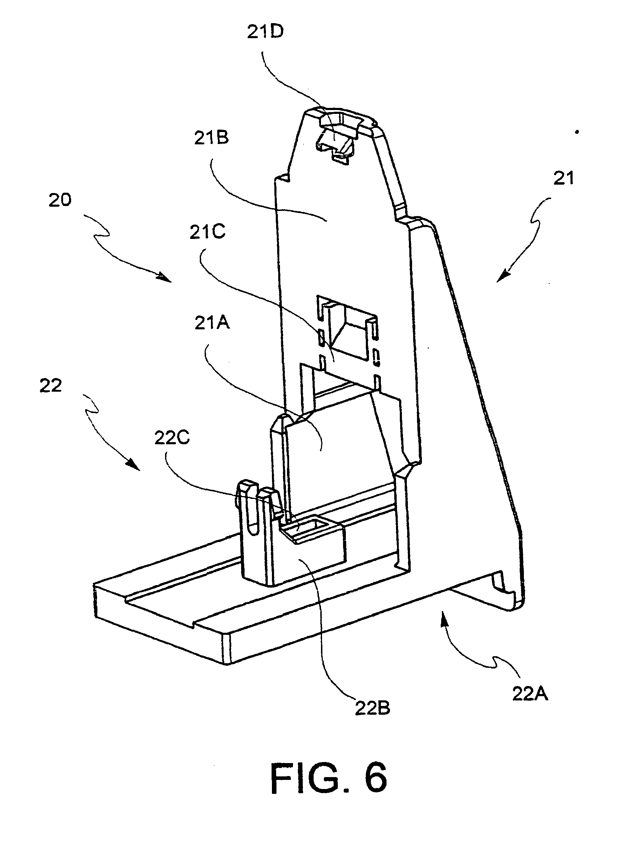

The portion 22 has a structure suitable to integrally receive a connector. In detail, with particular reference to Fig. 6, in the portion 22, a seat 22A is obtained on a side, and a turret 22B with a slit 22C communicating with the seat 22A is obtained on the other side.

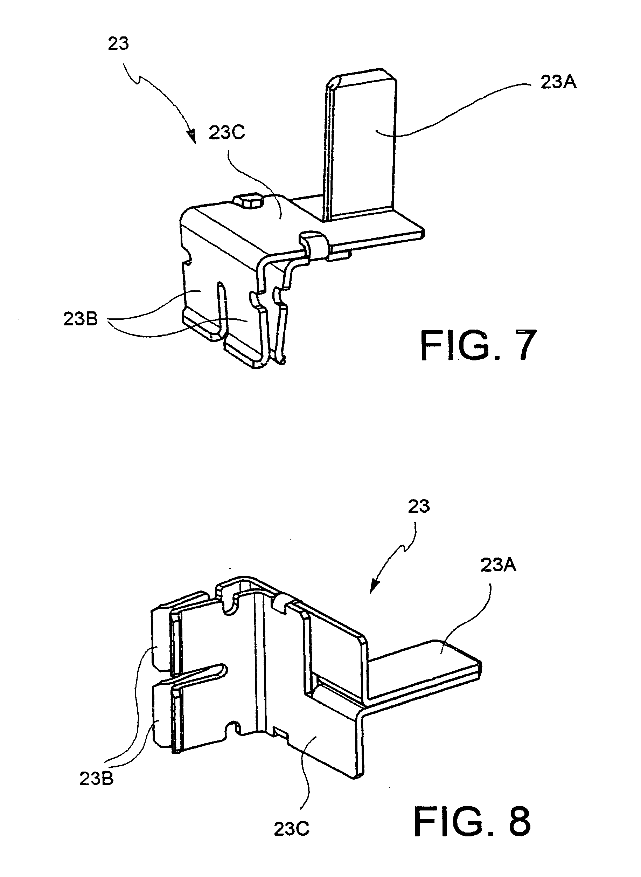

The connector, indicated with 23, is well illustrated in Figs. 7, 8, and provides a sheet contact member 23A and a clamp contact member 23B joined by a connecting portion 23C; the contact members 23A and 23B lie on two respective contact planes which are perpendicular one to the other, and the connecting portion 23C lies on a plane which is perpendicular to the two above-mentioned contact planes. Such connector 23 can be made of a suitably sheared and folded lamination.

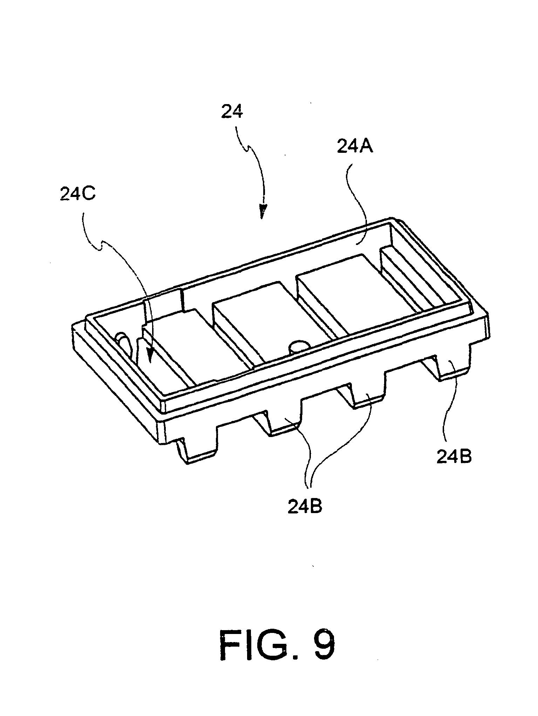

It is further provided a closure member 24, well illustrated in Fig. 9, having a general symmetrical configuration, having a seat 24A on a side, and a series of three parallel ribs 24B and a slit 24C parallel to the ribs 24B and communicating with the seat 24A on the other side.

In the assembling step, the connector 23 is inserted in the closure member 24 by making the clamp contact member 23B to pass through the same closure member slit 24C, then the sheet contact member 23A is made to pass into the slit 22C of the contact carrier portion 22 turret 22B, and finally the closure member 24 is snap-coupled to the contact carrier portion 22 seat 22A, thus making them integral.

It will be appreciated in Fig. 4 that the sheet contact member 23A projects from an appendix 20 side, while the clamp contact member 23B projects from the other appendix 20 side.

The coupling of appendix 20 to switch 10 body 11 is illustrated in Fig. 3. Actually, the appendix 20 sheet contact member 23A is inserted in the switch 10 plug-in connector 15, and the appendix 20 tooth 21D (Figs. 4, 6) snap-fits into the boxed body 11 notch 17. In this manner, the appendix 20 turns out to be removably mounted on the switch 10 boxed body 11.

The appendix 20 frangible section 21C is located at the switch 10 clamp 16, preventing access to the same clamp. In the case when this clamp 16 has to be used, the section 21C is broken and removed, so as to give free access to the clamp.

It will be appreciated in Fig. 1 that the clamp contact member 23B projects from the appendix 20 in a preset position, that is, the lower position in the example given. Anyhow, due to the closure member 24 symmetry, it is possible to assembly such closure member and make it integral, when it is rotated by 180° in the coupling plane, so that the clamp contact member 23B projects from the appendix 20 always in the same direction as before, but in another preset position which is parallel to the previous one, that is, the upper position in the example given.

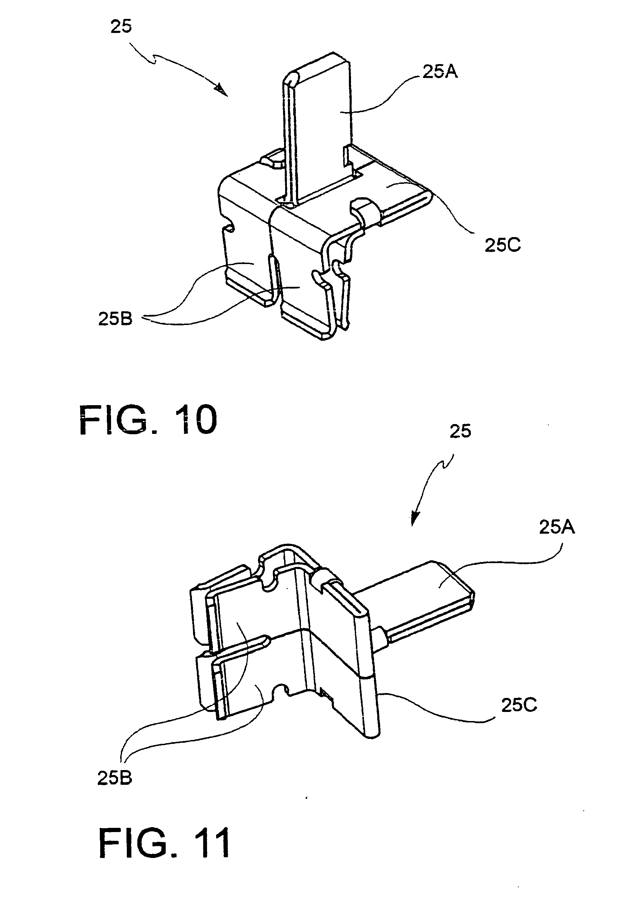

Another connector is illustrated in Figs. 10, 11, indicated with 25, which is an alternative to the preceding connector 23. It also provides a sheet contact member, indicated with 25A, and a clamp contact member, indicated with 25B, which are joined by a connecting portion 25C. The contact members 25A and 25B also lie on two respective contact planes which are perpendicular one to the other, and the connecting portion 25C lies on a plane which is perpendicular to the two above-mentioned contact planes. The difference compared to the connector 23 is that the connecting portion 25C is shorter in the connector 25. Such connector 25 can also be made of a suitably sheared and folded lamination.

For the application of the connector 25, the closure member will have to be slightly modified compared to the previous one, and will have a slit as the slit 24C of the closure member 24 illustrated, but at one of the two median ribs 24B, due to the connecting portion shorter length. In this manner, similarly to what has been noted for the connector 23, by applying the connector 25, the clamp contact member 25B will be able to project from the appendix 20 in one of two median preset positions compared to the lower and upper positions which have been noted for the connector 23, as a function of the arrangement in one or the other, rotated by 180°, positions, of the closure member.

The switch 10 is intended to be mechanically mounted on a track, and electrically connected to a bar assembly, inside an electric power distribution and protection board or cabinet.

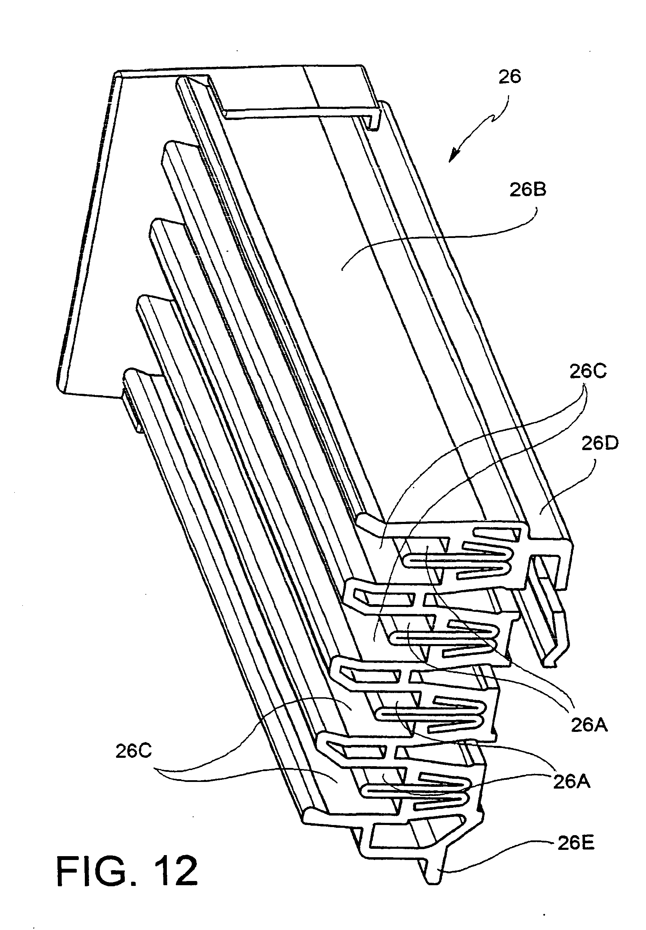

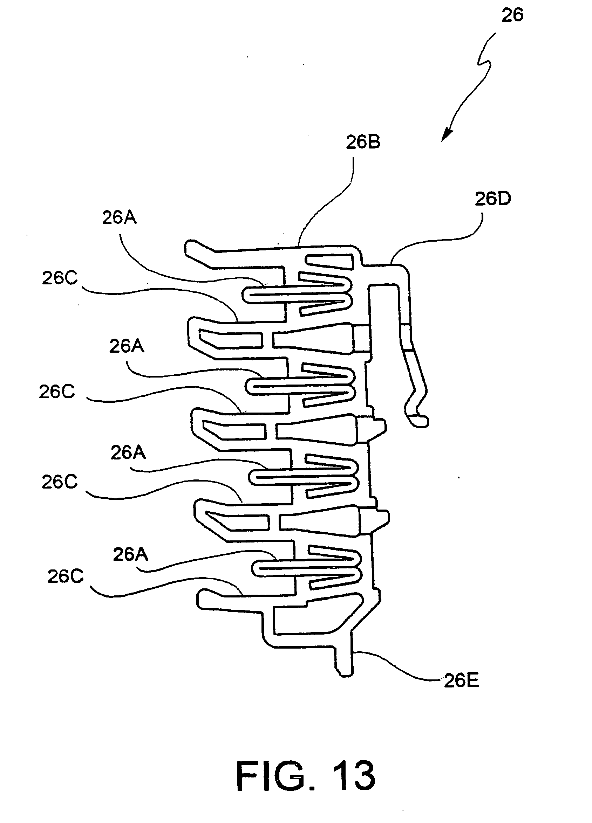

A bar assembly 26 is illustrated in Figs. 12, 13, to which a series of switches 10 has to be electrically coupled, for the application in a three-phase electrical circuit. The bar assembly 26 consists in a series of four parallel conductor bars 26A secured to a support structure 26B of insulating material in special, essentially "U"-shaped seats 26C of the same structure. The seats 26C have a determined depth, and a minimal width such as to prevent fingers from accessing the conductor bars. The support structure comprises profiles 26D, 26E for the coupling of the same structure.

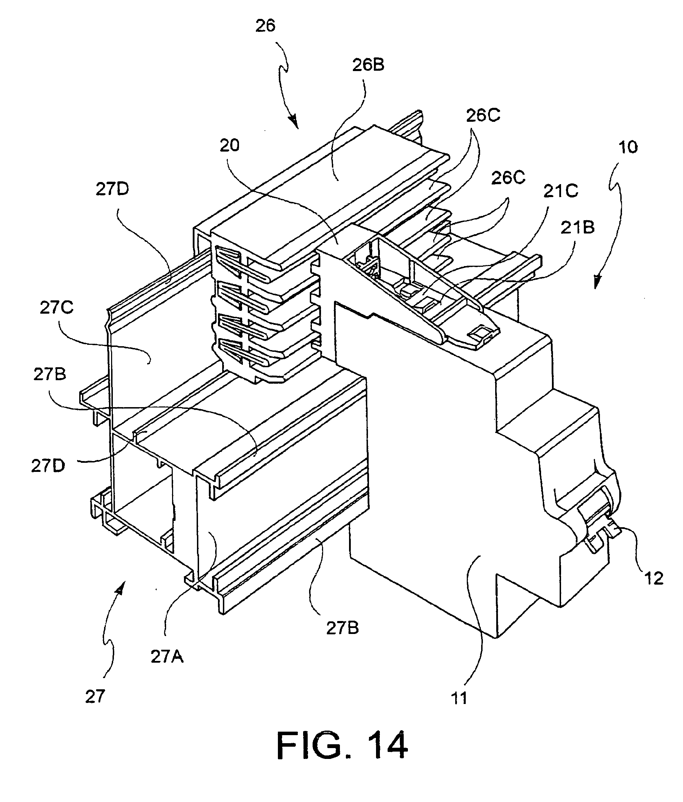

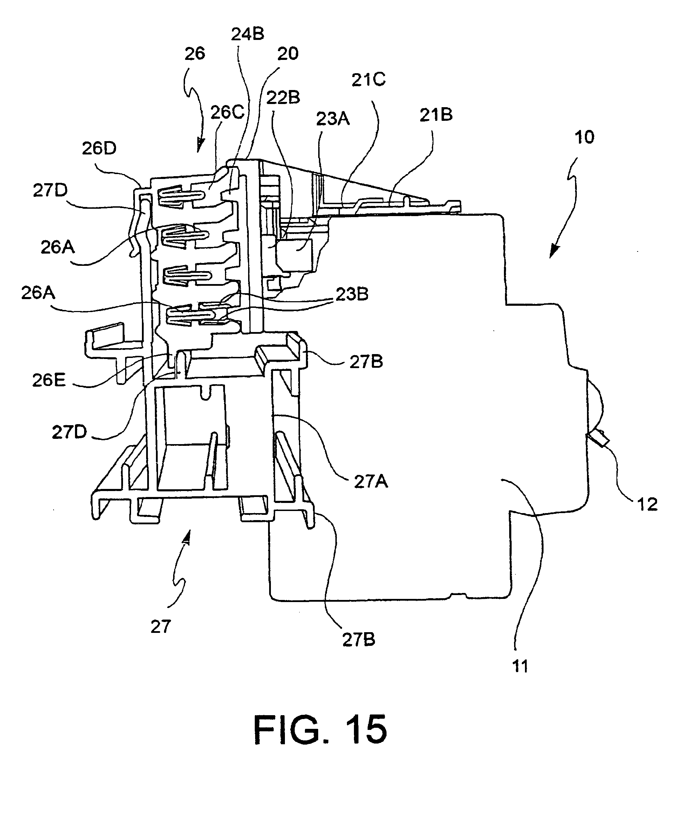

A composite track 27 is shown in the Figs. 14, 15, also of a known type, on which both the switch 10 and the bar assembly 26 are mounted in a known manner. An essentially "C"-shaped profile 27A is formed in the track 27, to which the switch 10 is coupled; particularly, the seat 13 (Figs. 1, 3) of the switch 10 body 11 couples to the track 27 profile 27A, and the two hooks 14 (Figs. 1, 3) couple to two projections 27B of the profile 27A. An essentially "L"-shaped profile 27C is further formed in the track 27, to which the bar assembly 26 profiles 26D, 26E couple to the profile 27C special projections 27D.

It will be appreciated in Fig. 15 that the clamp contact member 23B of the switch 10 appendix 20 inserts into the bar assembly 26 seat 26C and couples to the lower bar 26A. The appendix 20 three ribs 24B correspondently partially insert in the bar assembly 26 other three seats 26C.

Other three electrical switches 10 are connected to the bar assembly 26 illustrated, with the clamp contact members 23B so arranged as to correspondently couple to the other three bars 26A. The manner in which this clamp contacts 23B arrangement has to be implemented has been explained above.

The described and illustrated electrical equipment turns out to be very easy as a response to the modularity need, as noted in the insertion of a structural diversification for the apparatus-bars electrical connection. In fact, as it has been seen, the switch 10 remains the same, and only the appendix 20 in the closure member and the connector turns out to be slightly varied from equipment to equipment. Particularly, the variation in the closure member is minimal in terms of position of the slit 24C through which the clamp contact member, 23B or 25B passes, and therefore it only involves two types of closure member; and the variation in the connector, 23 or 25, is also minimal, since it only involves two types of connector, the short and the long one. It should be added that the assembling of appendix 20 on switch 10 is very easy, requiring an easy plug-in operation. Obviously, all this involves low production costs for the equipment. The appendix 20 replacement is likewise very easy in the event of a malfunctioning or breaking.

It should be added that the electrical safety need is also completely meet, which need involves the absence of any energized conductor members exposed at the moment when the electrical switch is disconnected from the distribution bars. In fact, at the moment when the switch 10 is disconnected, the distribution bars 26A are not accessible from fingers, as noted above. Furthermore, the appendix 20 frangible section 21C prevents access to the clamp 16, which is typically energized.

It shall be apparent that variations and/or additions to what has been described and illustrated are possible.

While an electrical switch has been shown in the example, what has been seen can be likewise applied to any types of electrical apparatus, for example, signalling or protection apparatuses to be applied to electric power distribution bars.

It shall be apparent that the electrical apparatus general configuration can vary.

Also the general configuration of the appendix removably constrained to the body of the electrical apparatus and the parts thereof can vary, for example, as a function of the configuration of the apparatus same body and the distribution bars configuration. It shall be noted that the configuration described and illustrated above for the appendix and parts constituting it turns out to be particularly easy and functional.

The coupling between appendix and apparatus body can also be different. Anyhow, in this case as well, the described and illustrated coupling turns out to be particularly easy and functional.

Monopolar, bipolar, tripolar, tetrapolar systems will be able to be implemented as a function of the number of equipments which are employed.

## Claims

1. A rapid plug-in modular electrical equipment comprising:
- an apparatus (10) with a boxed body (11) containing electrical devices, which can be removably mounted on a support track (27), adapted to be connected to one of a plurality of parallel electric power distribution bars (26A),
- an appendix (20) which is removably constrained to the boxed body (11), and carrying a first connecting member (23A; 25A) connected to the electrical devices, and a second connecting member (238; 25B) electrically connected to the first connecting member (23A; 25A) and adapted to couple to said electric power distribution bar (26A), said appendix (20) having a squared configuration to be arranged at an angle of the boxed body (11), said appendix comprising a coupling portion (21) and a contact carrier portion (22),
**characterised in that** said equipment further comprises a closure member (24) arranged to receive said first connecting member (23A; 25A) and said second connecting member (23B; 25B), said closure member (24) being further arranged to be snap-coupled to the contact carrier portion (22) of the appendix (20).

2. The equipment according to claim 1, wherein the coupling portion (21) couples to the boxed body (11) by a coupling consisting in notch (17) and tooth (21D).

3. The equipment according to claim 1, comprising a main plug-in connector (15) connected to the electrical devices, wherein said contact carrier portion carries said first (23A; 25A) and second (23B; 25B) connecting members, the first connecting member (23A; 25A) being coupled to the main plug-in connector (15).

4. The equipment according to claim 3, wherein said first (23A; 25A) and second (23B; 25B) connecting members are joined by a connecting portion (23C; 25C) and lie on two respective contact planes which are perpendicular one to the other, while the connecting portion (23C; 25C) lies on a plane which is perpendicular to the two above-mentioned contact planes.

5. The equipment according to claim 4, wherein said first (23A; 25A) and second (23B; 25B) connecting members extend from opposite sides relative to said connecting portion (23C; 25C).

6. The equipment according to claim 5, wherein the first connecting member (23A; 25A) projects from a slit (22C) of the contact carrier portion (22), and the second connecting member (23B; 25B) projects from a slit (24C) of the closure member (24) having a symmetrical configuration of the contact carrier portion (22).

7. The equipment according to claim 1 or 2, comprising a supplementary device (16) for the electrical connection to said electrical devices, wherein said coupling portion (21) comprises a frangible section (21C) covering said supplementary device (16).

## Patentansprüche

1. Schnell einsteckbare modulare elektrische Vorrichtung, umfassend:
- eine Einrichtung (10) mit einem elektrische Vorrichtungen enthaltenden kastenförmigen Körper (11), welche lösbar an einer Trägerschiene (27) befestigt werden kann und dazu eingerichtet ist, mit einer Mehrzahl von parallelen elektrischen Energieverteilungsstäben (26A) verbunden zu sein,
- einen Fortsatz (20), welcher lösbar an dem kastenförmigen Körper (11) befestigt ist und ein erstes Verbindungsglied (23A; 25A), welches mit den elektrischen Vorrichtungen verbunden ist, sowie ein zweites Verbindungsglied (23B; 25B) trägt, welches elektrisch mit dem ersten Verbindungsglied (23A; 25A) verbunden und dazu eingerichtet ist, mit dem elektrischen Energieverteilungsstab (26A) zu koppeln, wobei der Fortsatz (20) eine quadratische Konfiguration aufweist, welche an einem Winkel des kastenförmigen Körpers (11) anzuordnen ist, wobei der Fortsatz einen Kopplungsabschnitt (21) und einen Kontaktträgerabschnitt (22) umfasst,
**dadurch gekennzeichnet, dass** die Vorrichtung ferner ein Verschlussglied (24) umfasst, welches dazu eingerichtet ist, das erste Verbindungsglied (23A; 25A) und das zweite Verbindungsglied (23B; 25B) aufzunehmen, wobei das Verschlussglied (24) ferner derart eingerichtet ist, dass es einrastend mit dem Kontaktträgerabschnitt (22) des Fortsatzes (20) koppelt.

2. Vorrichtung nach Anspruch 1, wobei der Kopplungsabschnitt (21) mittels einer aus einer Nut (17) und einem Zahn (21 D) bestehenden Kopplung mit dem kastenförmigen Körper (11) koppelt.

3. Vorrichtung nach Anspruch 1, umfassend eine Hauptsteckverbindungseinrichtung (15), welche mit den elektrischen Vorrichtungen verbunden ist, wobei der Kontaktträgerabschnitt das erste (23A; 25A) und zweite (23B; 25B) Verbindungsglied trägt, wobei das erste Verbindungsglied (23A; 25A) mit der Hauptsteckverbindungseinrichtung (15) gekoppelt ist.

4. Vorrichtung nach Anspruch 3, wobei das erste (23A; 25A) und zweite (23B; 25B) Verbindungsglied mittels eines Verbindungsabschnitts (23C; 25C) miteinander verbunden sind und auf zwei jeweiligen Kontaktebenen liegen, die zueinander senkrecht verlaufen, während der Verbindungsabschnitt (23C; 25C) auf einer Ebene liegt, welche senkrecht zu den beiden oben genannten Kontaktebenen verläuft.

5. Vorrichtung nach Anspruch 4, wobei sich das erste (23A; 25A) und zweite (23B; 25B) Verbindungsglied von gegenüberliegenden Seiten bezüglich des Verbindungsabschnitts (23C; 25C) erstrecken.

6. Vorrichtung nach Anspruch 5, wobei das erste Verbindungsglied (23A;
25A) von einem Schlitz (22C) des Kontaktträgerabschnitts (22) vorsteht, und das zweite Verbindungsglied (23B; 25B) von einem Schlitz (24C) des Verschlussglieds (24) vorsteht, welches eine symmetrische Konfiguration des Kontaktträgerabschnitts (22) aufweist.

7. Vorrichtung nach Anspruch 1 oder 2, umfassend eine Zusatzvorrichtung (16) für die elektrische Verbindung mit den elektrischen Vorrichtungen, wobei der Kopplungsabschnitt (21) einen zerbrechlichen Abschnitt (21 C) umfasst, welcher die Zusatzvorrichtung (16) abdeckt.

## Revendications

1. Equipement électrique modulaire à attache rapide comprenant :
un appareil (10) avec un corps en forme de boîte (11) contenant des dispositifs électriques, qui peut être monté de manière amovible sur un rail de support (27), adapté pour être raccordé à l'une d'une pluralité de barres de distribution de courant électrique parallèles (26A),
un appendice (20) qui est contraint de manière amovible sur le corps en forme de boîte (11) et portant un premier élément de raccordement (23A ; 25A) raccordé aux dispositifs électriques et un second élément de raccordement (23B ; 25B) électriquement raccordé au premier élément de raccordement (23A ; 25A) et adapté pour se coupler à ladite barre de distribution de courant électrique (26A), ledit appendice (20) ayant une configuration carrée à agencer selon un angle du corps en forme de boîte (11), ledit appendice comprenant une partie de couplage (21) et une partie porte-contact (22),
**caractérisé en ce que** ledit équipement comprend en outre un élément de fermeture (24) agencé pour recevoir ledit premier élément de raccordement (23A ; 25A) et ledit second élément de raccordement (23B ; 25B), ledit élément de fermeture (24) étant en outre agencé pour être couplé par encliquetage à la partie porte-contact (22) de l'appendice (20).

2. Equipement selon la revendication 1, dans lequel la partie de couplage (21) se couple au corps en forme de boîte (11) par un couplage se composant d'une encoche (17) et d'une dent (21 D).

3. Equipement selon la revendication 1, comprenant un connecteur principal enfichable (15) raccordé aux dispositifs électriques, dans lequel ladite partie porte-contact porte lesdits premier (23A ; 25A) et second (23B ; 25B) éléments de raccordement, ledit premier élément de raccordement (23A ; 25A) étant couplé au connecteur principal enfichable (15).

4. Equipement selon la revendication 3, dans lequel lesdits premier (23A ;
25A) et second (23B ; 25B) éléments de raccordement sont assemblés par une partie de raccordement (23C ; 25C) et se trouvent sur deux plans de contact respectifs qui sont perpendiculaires entre eux, alors que la partie de raccordement (23C ; 25C) se trouve sur un plan qui est perpendiculaire aux deux plans de contact mentionnés ci-dessus.

5. Equipement selon la revendication 4, dans lequel lesdits premier (23A ;
25A) et second (23B ; 25B) éléments de raccordement s'étendent à partir des côtés opposés par rapport à ladite partie de raccordement (23C ; 25C).

6. Equipement selon la revendication 5, dans lequel le premier élément de raccordement (23A ; 25A) fait saillie d'une fente (22C) de la partie porte-contact (22), et le second élément de raccordement (23B ; 25B) fait saillie d'une fente (24C) de l'élément de fermeture (24) ayant une configuration symétrique de la partie porte-contact (22).

7. Equipement selon la revendication 1 ou 2, comprenant un dispositif supplémentaire (16) pour le raccordement électrique auxdits dispositifs électriques, dans lequel ladite partie de couplage (21) comprend une section cassante (21 C) recouvrant ledit dispositif supplémentaire (16).
